Europäisches Patentamt

European Patent Office

Office européen des brevets

(11) Veröffentlichungsnummer: **0 364 658**
**A2**

## EUROPÄISCHE PATENTANMELDUNG

(21) Anmeldenummer: 89107871.9

(22) Anmeldetag: 29.04.89

(51) Int. Cl.5: **H04Q 1/14**

(30) Priorität: **21.10.88 DE 3836360**

(43) Veröffentlichungstag der Anmeldung:
**25.04.90 Patentblatt 90/17**

(84) Benannte Vertragsstaaten:
**AT BE CH DE ES FR GB GR IT LI LU NL SE**

(71) Anmelder: **KRONE Aktiengesellschaft**
**Beeskowdamm 3-11**
**D-1000 Berlin 37(DE)**

(72) Erfinder: **Delakowitz, Bernd**
**Weinbergshöhe Rebenweg 2**
**D-1000 Berlin 20(DE)**
Erfinder: **Hegner, Gunter**
**Moränenweg 22**
**D-1000 Berlin 27(DE)**

(54) **Verteilereinrichtung, insbesondere für den Hauptverteiler von Fernsprechanlagen.**

(57) Die Erfindung bezieht sich auf eine Verteilereinrichtung (1), insbesondere für den Hauptverteiler von
Fernsprechanlagen zum Anschluß von Teilnehmer-,
Vermittlungs- und Rangierleitungen, aus mehreren
an der Vorder- und Rückseite (4,5) angeordneten
Anschlußfeldern (A,B,C,D), die mit Kontaktabgriffen
(13) versehene Einstecköffnungen (8) aufweisen.

Um eine Verteilereinrichtung (1) zu schaffen, bei
der die Vermittlungs- und Teilnehmerkabel gemeinsam auf einer Anschlußseite oder getrennt auf der
Vorder- und Rückseite (4,5) anschließbar sind, sind
die Anschlußfelder (A,B,C,D) an einer Zentraleinheit
(2) vorgesehen. Die Kontaktabgriffe (13) verschiedener Anschlußfelder sind beliebig miteinander innerhalb der Zentraleinheit (2) verbunden. In die Einstecköffnungen (6) sind Funktionselemente (7) mit
Steckerzungen (12) zur elektrischen Verbindung mit
den Kontaktabgriffen (13) eingesteckt. Die Funktionselemente sind Anschalt-, Trenn-, Schutz- oder Testelemente (8,9,10,11) ausgebildet.

FIG.1

## Verteilereinrichtung, insbesondere für Hauptverteiler von Fernsprechanlagen

Die Erfindung bezieht sich auf eine Verteilereinrichtung, insbesondere für Hauptverteiler von Fernsprechanlagen gemäß dem Oberbegriff des Anspruches 1.

Verteilereinrichtungen, insbesondere für den Hauptverteiler von Fernsprechanlagen, dienen als Schnittstelle zwischen den vom Teilnehmer kommenden Teilnehmerkabel und den zu den vermittlungstechnischen Anlagen führenden Vermittlungskabel. Diese Kabel können mit Trenn-, Schutz- oder Testelementen verbunden werden, um die verschiedensten Funktionen auszuführen. So können diese Leitungen vor Überspannungen und Überströmen geschützt werden, indem ein Schutzelement in den Leitungsweg eingeschaltet wird. Eine derartige Verteilereinrichtung der gattungsgemäßen Art ist aus der DE-OS 36 14 063 bekannt. Diese Verteilereinrichtung besteht aus mit Kontaktelementen und Trennstellen versehenen Anschlußmodulen zum Anschluß sowohl der Teilnehmer- als auch der Vermittlungskabel. Das Anschlußmodul weist auf der vorderen Anschalteseite und auf der rückwärtigen Manipulierseite Einstecköffnungen zum beidseitigen Einstecken von Schaltsteckern in die, den Leitungsweg durchschaltenden Trennstellen auf.

Diese Verteilereinrichtung hat jedoch den Nachteil, daß die Verteilereinrichtung starr aufgebaut ist, so daß die Vermittlungs- und Teilnehmerkabel nur an der vorderen Anschalteseite angeschlossen werden können. Anschlußmöglichkeiten an der rückwärtigen Manipulierseite der Verteilereinrichtung bestehen nur über Rangieranschlußelemente zum Anschluß von Rangierleitungen. Ein weiterer Nachteil besteht darin, daß beim Einstecken von Schaltsteckern in die Trennstelle die Anschlußkontakte abgedeckt sind, so daß Neuanschlüsse von Kabeladern nur noch durch Ziehen der Schaltstecker erfolgen können. Es kann immer nur eine gewünschte Funktion innerhalb des Anschlußmodules erfüllt werden, da nur eine Trennstelle für einen Leitungsweg vorhanden ist. Ist der Leitungsweg z.B. mit einem Überspannungsschutz versehen, so besteht keine Möglichkeit, gleichzeitig den Leitungsweg mit einem Testelement zu messen bzw. zu prüfen.

Der Erfindung liegt von daher die Aufgabe zugrunde, eine Verteilereinrichtung der gatttungsgemäßen Art zu schaffen, bei der die Vermittlungs- und Teilnehmerkabel gemeinsam auf einer Anschlußseite oder getrennt auf der Vorder- und Rückseite anschließbar sind. Die Verteilereinrichtung soll daher variabel aufgebaut sein und die unterschiedlichsten Funktionen erfüllen. Verschiedene Funktionsaufgaben, wie z.B. Testen, Schützen oder Trennen sollen einzeln oder gleichzeitig für den zwischen Teilnehmer- und Vermittlungskabel bestehenden Leitungsweg gelöst werden.

Die Lösung dieser Aufgabe ergibt sich aus den kennzeichnenden Merkmalen des Patentanspruches 1. Erfindungsgemäß besteht die Verteilereinrichtung aus einer Zentraleinheit mit mehreren Anschlußfeldern. Die Anschlußfelder besitzen mehrere Einstecköffnungen mit Kontaktabgriffen.

Vorteilhafterweise können nun innerhalb der Zentraleinheit, bei zwei nebeneinanderliegenden Teilelementen, die Kontaktabgriffe von verschiedenen Anschlußfeldern entsprechend den elektrischen Erfordernissen über Leitungswege verbunden werden.

Werden Teilnehmer- und Vermittlungsleitung auf der rückwärtigen Seite der Verteilereinrichtung an jeweils einem Anschlußfeld angeschlossen, so sind die rückwärtigen Kontaktabgriffe mit den entsprechenden vorderseitigen Kontaktabgriffen der Zentraleinheit einer ersten Ebene verbunden. In einer zweiten Ebene sind die vorderen Kontaktabgriffe zweier Teilelemente über ein Verbindungselement miteinander verbunden.

Die einzelnen Funktionsaufgaben werden durch, in die Einstecköffnungen einsteckbare Funktionselemente gelöst, die als Anschalt-, Trenn-, Schutz- oder Testelement ausgebildet sind. Diese Funktionselemente stellen an der Vorderseite die elektrischen Verbindungen zwischen den Kontaktabgriffen der Zentraleinheit der ersten und zweiten Ebene her. Als ein wesentlicher Vorteil ergibt sich dadurch, daß in verschiedenen Anschlußfeldern mehrere Funktionselemente in einen Leitungsweg eingeschaltet werden können. Durch die Anordnung von mehreren Anschlußfeldern läßt sich jedes Anschlußfeld von den übrigen Anschlußfeldern unabhängig bedienen.

Weitere vorteilhafte Ausgestaltungen der Erfindung ergeben sich aus den Unteransprüchen. So bewirkt das Trennelement gemäß Anspruch 11, daß Anschalt-, Schalt-oder Testelemente in das Trennelement einsteckbar sind. In ein Doppel-Trennelement lassen sich zwei Funktionselemente gleicher oder verschiedener Art einschalten.

Die Erfindung ist nachfolgend anhand eines in den Zeichnungen näher dargestellten Ausführungsbeispieles einer Verteilereinrichtung näher erläutert. Es zeigen:

Fig 1: eine Perspektivansicht der Verteilereinrichtung mit in mehreren Ebenen angeordneten Zentraleinheiten und mit verschiedenen Funktionselementen,

Fig 2: einen Längsschnitt durch die Zentraleinheit mit eingesteckten Schutz-, Trenn- und

Anschlußelementen,

Fig 3: einen Längsschnitt durch die Zentraleinheit mit eingesteckten Brückenelementen und Trennelementen, in die Anschlußelemente eingesteckt sind,

Fig 3a, 3b, 3c: eine schematische Darstellung der Hauptansicht der Trennelemente mit eingesteckten Anschlußelementen,

Fig 4: eine schematische Darstellung einer aus Zentraleinheiten und Funktionselementen gebildeten Verteilereinrichtung mit zentraler Leitungsführung,

Fig 5: eine schematische Darstellung einer aus Zentraleinheiten und Funktionselementen gebildeten Verteilereinrichtung mit seitlicher Leitungsführung,

Fig 6: einen Längsschnitt durch die Zentraleinheit mit Funktionselementen zum Anschluß von Koaxial-Kabeln und

Fig. 7: einen Längsschnitt durch die Zentraleinheit mit Funktionselementen zum Anschluß von konfektionierten ein- und mehrpoligen, steckbaren Rangierkabeln.

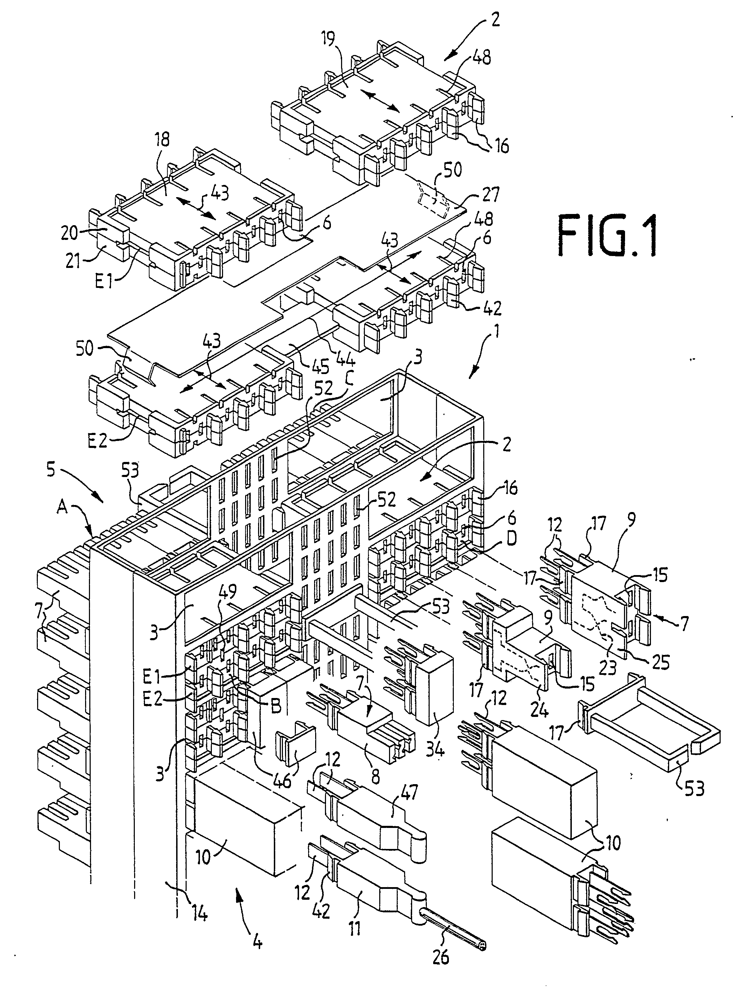

Die Verteilereinrichtung 1 besteht aus mindestens einer Zentraleinheit 2 und aus unterschiedlichen Funktionselementen 7, die in die Zentraleinheit 2 einsteckbar sind, wie später noch näher erläutert werden wird. Mehrere Zentraleinheiten 2 sind übereinander auf unterschiedlichen Ebenen E1,E2 in Rahmenteile 14 eingesetzt, wie in Fig. 1 dargestellt ist. Die Rahmenteile 14 bestehen aus zwei metallischen Gehäusehälften, die mit rechteckförmigen Aufnahmeöffnungen 3 und Einstecköffnungen 52 versehen sind. Zwischen den Zentraleinheiten 2 sind Erdbleche 27 angeordnet, die über Kontaktzungen 50 eine elektrische Verbindung zu dem Rahmenteil 14 herstellen.

Im Ausführungsbeispiel besteht die Zentraleinheit 2 aus zwei Teilelementen 18,19, die in Aufnahmeöffnungen 3 des Rahmenteiles 14 eingesteckt sind. Jedes Teilelement 18,19 ist aus zwei aus Kunststoff hergestellten plattenförmigen Gehäusehälften 20,21 zusammengesetzt, die über eine nicht dargestellte Rastverbindung miteinander verbunden sind. Die beiden Teilelemente 18,19 weisen an den Längsseiten jeweils ein Anschlußfeld A,C bzw. B,D auf, so daß die Zentraleinheit 2 insgesamt vier Anschlußfelder A,B,C,D besitzt. Jedes Teilelement 18,19 ist für vier Leitungswege ausgelegt, somit sind für jedes Anschlußfeld A,B,C,D acht Einstecköffnungen 6 für vier Doppeladern vorgesehen.

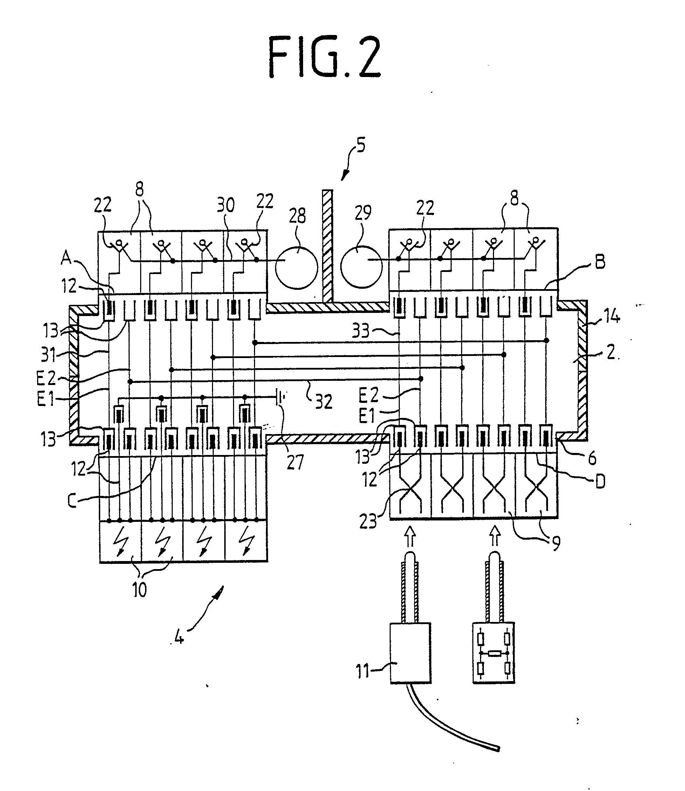

Innerhalb der Gehäusehälften 20,21 der Zentraleinheit 2 sind an den Einstecköffnungen 6 Kontaktabgriffe 13 herangeführt, wie insbesondere die Figur 2 zeigt.

Ein Kontaktabgriff 13 eines Anschlußfeldes C bzw. D ist entweder mit einem Kontaktabgriff 13 eines Anschlußfeldes A bzw. B des gleichen Teilelementes 18 und/oder mit einem Kontaktabgriff 13 des Anschlußfeldes D bzw. C des zweiten Teilelementes 19 der Zentraleinheit 2 verbunden. Bei der in Fig. 1 dargestellten oberen Zentraleinheit 2 der Ebene 1 sind nur Querverbindungen 43, bei der darunter dargestellten Zentraleinheit 2 Quer- und Längsverbindungen 43,44 möglich, wie es die Pfeile andeuten. Für die Längsverbindungen 44 ist ein Verbindungselement 45 vorgesehen, das aus einer Leiterplatte mit Leiterbahnen besteht. Das Verbindungselement 45 kann aber auch aus einem Flachbandkabel, aus Einzelleitungen oder aus einem Kontaktblech bestehen. Zwischen jeweils zwei Einstecköffnungen 6 ist ein Rastelement 16 vorgesehen, das als Rasthaken 42 ausgebildet ist und zur Rastverbindung mit den Funktionselementen 7 dient. An der Ober- und Unterseite der Zentraleinheit 2 sind darüber hinaus Nuten 48 angeordnet, wobei zwei Nuten 48 zweier in das Rahmenteil 14 eingesetzter Zentraleinheiten 2 zueinander fluchten und somit eine Einstecköffnung 49 bilden. In die Einstecköffnungen 49 sind zur Kontaktierung mit dem Erdblech 27 Steckerzungen 12 der Funktionselemente 7 einsteckbar, wie später noch erläutert wird.

Um verschiedene Funktionsaufgaben zu erfüllen, sind mehrere Funktionselemente 7 vorgesehen, die in Fig. 1 in einer perspektivischen Darstellung gezeigt sind. Die Funktionselemente 7 sind an die Anschlußfelder A,B,C,D anschließbar, wozu sämtliche Funktionselemente 7 an einer Stirnseite aus dem Gehäuse herausragende gabelförmige Steckerzungen 12 und Rastelemente 17 aufweisen. Die Steckerzungen 12 der Funktionselemente 7 sind in die Einstecköffnungen 6 der Zentraleinheit 2 eingesteckt und kontaktieren somit die Kontaktabgriffe 13.

Die Rastelemente 17 der Funktionselemente 7 verrasten mit den Rastelementen 16 der Zentraleinheit 2. Die Funktionselemente 7 sind entweder als Anschlußelemente 8, als Trennelemente 9, als Schutzelemente 10 oder als Testelemente 11 aufgebaut. Jedes Funktionselement 7 besitzt mindestens zwei Steckerzungen 12, da jeder Leitungsweg aus mindestens einer Doppelader besteht. Beim Anschlußelement 8 sind die gabelförmigen Steckerzungen 12 am gegenüberliegenden Ende mit einem Anschlußkontakt, vorzugsweise einem Schneid-Klemmkontakt 22 verbunden. Die gabelförmigen Steckerzungen 12 können mit einer einseitigen Isolierung 54 versehen sein.

Beim Trennelement 9 bilden die in Verbindung stehenden Verlängerungen zweier Steckerzungen 12 jeweils einen Trennkontakt 23 bzw. einen Schaltkontakt im Gehäuse des Trennelementes 9, der über eine an der Stirnseite des Trennelementes vorgesehene Einstecköffnung 15 zugänglich ist. Das Trennelement 9 ist entweder aus einem Einfachtrennelement 24 oder einem Doppeltrennelement 25 gebildet.

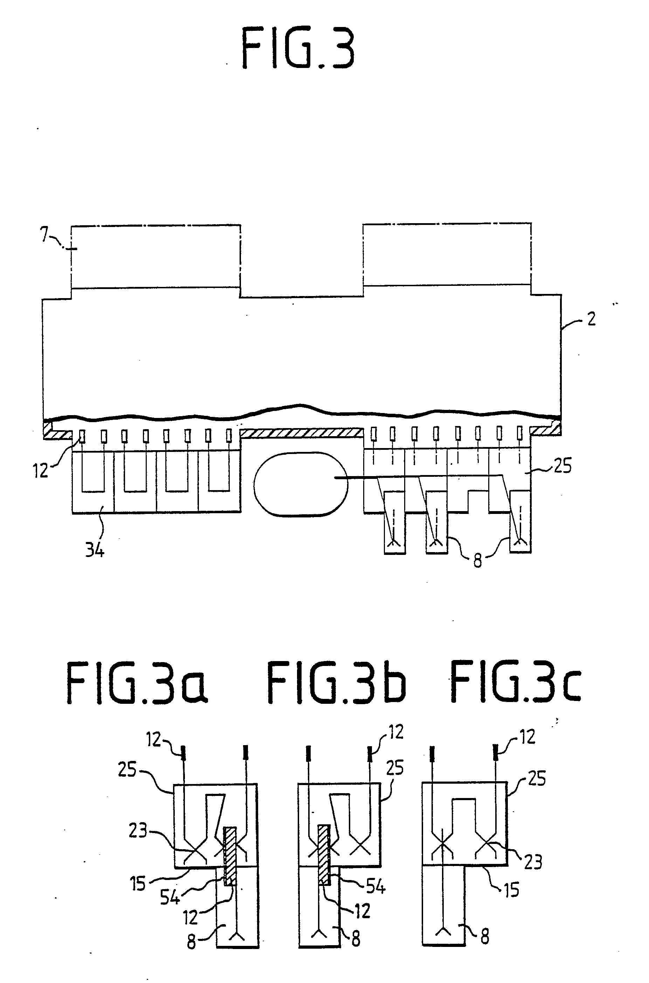

In den Figuren 1 und 3a ist ein Doppeltrennelement 25 dargestellt, welches zwei in Reihe geschaltete Trennkontaktpaare 23 mit vier Steckerzungen 12 aufweist. Das in Fig. 1 dargestellte Einfachtrennelement 24 weist ein Trennkontaktpaar 23 mit vier Steckerzungen 12 auf. Beim Testelement 11 sind die Steckerzungen 12 als beidseitig beschichtete Leiterplatten oder als durchgehende Metallstreifen ausgebildet und dienen zum Einstekken in die Einstecköffnungen 15 der Trennelemente 24,25 oder in die Einstecköffnungen 6 der Zentraleinheit 12. Die Steckerzungen 12 sind hierbei mit einer Verbindungsleitung 26 verbunden. Die gabelförmigen Steckerzungen 12 können mit einer einseitigen Isolierung 54 versehen sein.

Der in Fig. 1 dargestellte Schaltstecker 47 besitzt zwei Leiterplatten zum Einstecken in die Einstecköffnungen 8 und dient z.B. als Dämpfungsglied. •

Als weiteres Funktionselement 7 ist ein Schutzelement 10 vorgesehen, welches mindestens fünf gabelförmige Steckerzungen 12 aufweist, wobei vier Steckerzungen 12 in die Einstecköffnungen 6 eingesteckt werden, zur Verbindung mit den Kontaktabgriffen 13 des Leitungsweges, und die fünfte Steckerzunge 12 in die Einstecköffnung 49 eingesteckt wird, zur Kontaktierung mit dem Erdblech 27. In die Einstecköffnungen 6 ist darüber hinaus zum Abdecken der Einstecköffnungen 6 eine Abdeckkappe 46 vorgesehen, die keine Steckerzungen 12 aufweist.

Anhand der Figuren wird nun die dargestellte Anschlußmöglichkeit der Teilnehmer- und Vermittlungskabel und deren Funktionselemente 7 näher erläutert. Weitere Anschlußkombinationen sind möglich. Die Figur 2 zeigt die Verbindungen zweier übereinanderliegender Zentraleinheiten 2 auf zwei verschiedenen Ebenen E1,E2 mit einem dazwischenliegenden schematisch dargestellten Erdblech 27. Im Ausführungsbeispiel sind die Teilnehmerkabel 28 und die Vermittlungskabel 29 an der Rückseite 5 der Verteilereinrichtung 1 angeschlossen. An der Rückseite 5 der Zentraleinheit 2 sind Anschlußelemente 8 an beiden Anschlußfeldern A,B mit ihren Steckerzungen 12 in die Kontaktabgriffe 13 eingesteckt. Auf der Vorderseite 4 sind im linken Anschlußfeld C Schutzelemente 10 und im rechten Anschlußfeld D Trennelemente 9 eingesteckt. Die Verbindung der Teilnehmerkabel 28 mit den Vermittlungskabeln 29 geschieht wie folgt:

Der Leitungsweg verläuft von der Rückseite 5 über die Kabelader 30 zum Schneid-Klemmkontakt 22 des Anschluß elementes 8 des Anschlußfeldes A, über die Steckerzunge 12 vom Kontaktabgriff 13 des Anschlußfeldes A der Rückseite, über die Verbindungsleitung 31 zum Kontaktabgriff 13 des Anschlußfeldes C der Vorderseite 4 als Querverbindung 43, der mit der Steckerzunge 12 des Schutzelementes 10 verbunden ist. Die mittlere Steckerzunge 12 des Schutzelementes 10 ist in die Einstecköffnung 49 eingesteckt und dadurch mit dem Erdblech 27 verbunden. Das im Schutzelement 10 angeordnete nicht dargestellte Schutzglied ist dadurch mit der einen Anschlußseite mit dem Leitungsweg und mit der anderen Anschlußseite auf Erde geschaltet.

Der Leitungsweg verläuft nun durch das Schutzelement 10 von der Ebene E1 zu der darüber- bzw. darunterliegenden Ebene E2 zu einer Verbindungsleitung 32, die als Längsverbindung 44 mit dem Kontaktabgriff 13 des Anschlußfeldes D eines Trennelementes 9 verbunden ist. Im Trennelement 9 verläuft der Leitungsweg von der Ebene E2 zur Ebene E1 über den Trennkontakt 23, welcher mit seiner zweiten Steckerzunge 12 mit einer Verbindungsleitung 33 verbunden ist, die als Querverbindung 43 den Kontaktabgriff 13 des Anschlußfeldes D der Vorderseite 4 mit dem Kontaktabgriff 13 eines Anschlußelementes 8 des Anschlußfeldes B der Rückseite 5 verbindet. An der Rückseite 5 ist das Vermittlungskabel 29 am Anschlußkontakt 22 des Anschlußelementes 8 angeschlossen, wodurch die Verbindung zwischen Teilnehmerkabel 28 und Vermittlungskabel 29 hergestellt ist, mit einer Schutzeinrichtung 10 und einem Trennelement 9.

Zur Führung und Halterung der Teilnehmerkabel 28 und Vermittlungskabel 29 sind Drahtführungselemente 53 vorgesehen, deren Rastelemente 17 in die Einstecköffnungen 52 des Rahmenteiles 14 eingesteckt sind, die zwischen den Aufnahmeöffnungen 3 angeordnet sind. .

In den Figuren 1 und 3 ist ein Brückenstecker 34 zur einfachen Verbindung von zwei Ebenen E1,E2 dargestellt. In den Figuren 3a,3b,3c sind verschiedene Ausführungen von Anschlußelementen 8 dargestellt, bei denen die über die Einstecköffnungen 15 in die Trennkontakte 23 des Trennelementes 24 eingesteckten Steckerzungen 12 teilweise einseitig mit einer Isolierung 54 oder ohne Isolierung ausgebildet sind.

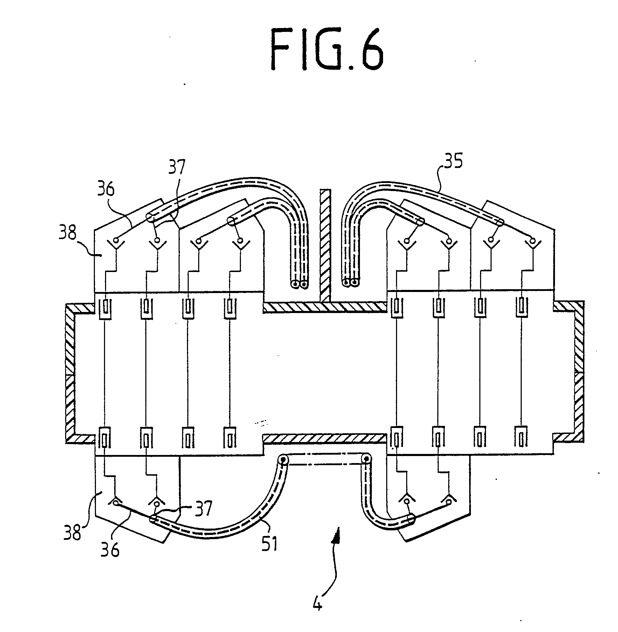

Die Figur 6 zeigt die Möglichkeiten zum Anschluß von Koaxialkabeln 35, wofür Koaxialstecker 38 zum Anschluß des Leiters 36 und des Kabelschirms 37 vorgesehen sind. Auf der Vorderseite 4 sind die Rangier-Koaxialkabel 51 verlegt.

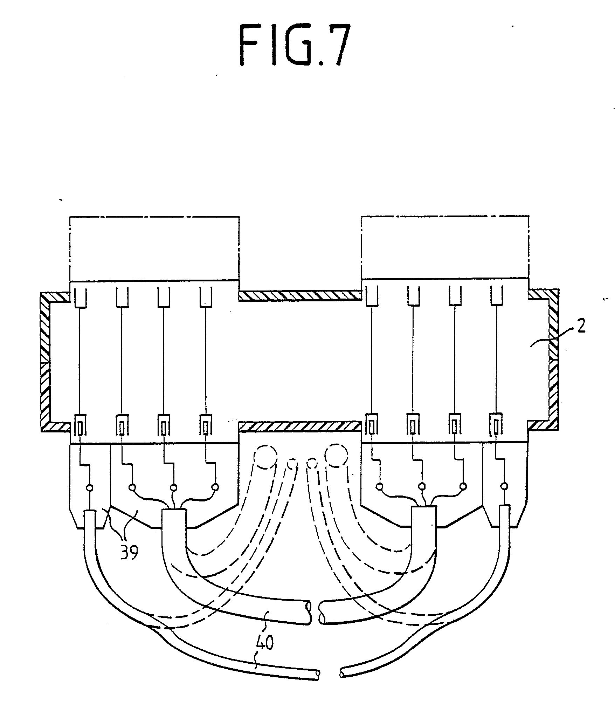

In Figur 7 sind Rangierstecker 39 für einen und mehrere Leitungswege dargestellt, an denen ein- und mehrpolige Rangierkabel 40 angeschlossen sind.

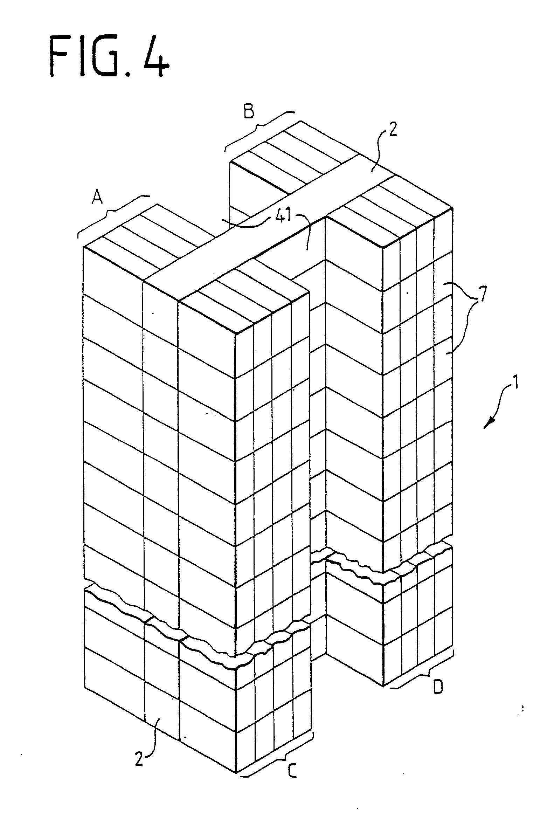

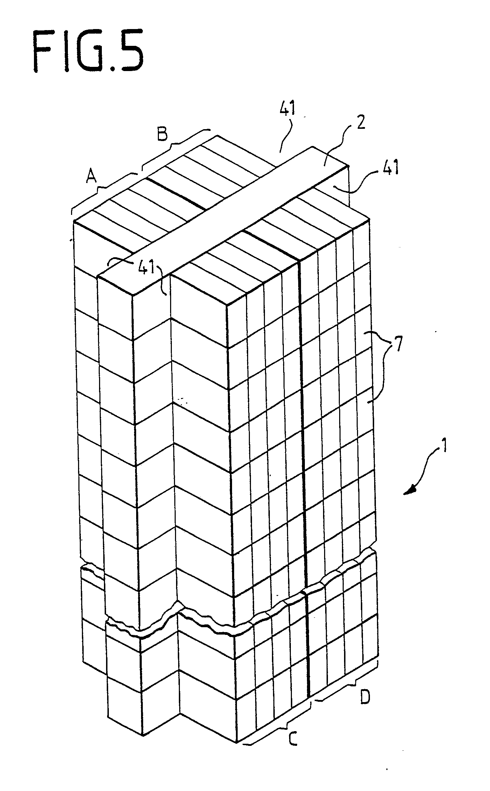

In den Figuren 4 und 5 sind zwei verschiedene Baumöglichkeiten der Verteilereinrichtung 1 dargestellt. In Figur 4 sind mittig die Zentraleinheiten 2 mit den vorderseitig und rückseitig angeschlossenen Funktionseinheiten 7 dargestellt. Der Leitungskanal 41 zur Velegung der Vermittlungs- und Teilnehmerkabel 28,29 ist hierbei mittig angeordnet.

In Figur 5 ist der Leitungskanal 41 seitlich vorgesehen, die Funktionselemente 7 sind dadurch ohne bzw. mit geringem Abstand dicht an dicht angeordnet.

Bezugszeichenliste

1 Verteilereinrichtung
2 Zentraleinheit
3 Aufnahmeöffnungen
4 Vorderseite
5 Rückseite
6 Einstecköffnung
7 Funktionselemente
8 Anschlußelement
9 Trennelement
10 Schutzelement
11 Testelement
12 Steckerzunge
13 Kontaktabgriff
14 Rahmenteil
15 Einstecköffnung
16,17 Rastelemente
18,19 Teilelemente
20,21 Gehäusehälften
22 Schneid-Klemm-Kontakt
23 Trennkontakt
24 Einfachtrennelement
25 Doppeltrennelement
26 Verbindungsleitung
27 Erdblech
28 Teilnehmerkabel
29 Vermittlungskabel
30 Kabelader
31,32,33 Verbindungsleitung
34 Brückenstecker
35 Koaxialkabel
36 Leiter
37 Kabelschirm
38 Koaxialstecker
39 Rangierstecker
40 Rangierkabel
41 Leitungskanal
42 Rasthaken
43,44 Quer- und Längsverbindungen
45 Verbindungselement
46 Abdeckkappe
47 Schaltstecker
48 Nuten
49 Einstecköffnungen
50 Kontaktzungen
51 Rangier-Koaxialkabel
52 Einstecköffnungen
53 Drahtführungselement

54 Isolierung
A,B,C,D Anschlußfeld
E1,E2 Ebenen

## Ansprüche

1. Verteilereinrichtung, insbesondere für den Hauptverteiler von Fernsprechanlagen zum Anschluß von Teilnehmer-, Vermittlungs- und Rangierleitungen, aus mehreren an der Vorder- und Rückseite angeordneten Anschlußfeldern, die mit Kontaktabgriffen versehene Einstecköffnungen aufweisen,
dadurch gekennzeichnet,
daß die Anschlußfelder (A,B,C,D) an einer Zentraleinheit (2) vorgesehen sind,
daß die Kontaktabgriffe (13) verschiedener Anschlußfelder (A,B,C,D) beliebig miteinander innerhalb der Zentraleinheit (2) verbunden sind und
daß in die Einstecköffnungen (6) Funktionselemente (7) mit Steckerzungen (12) zur elektrischen Verbindung mit den Kontaktabgriffen (13) eingesteckt sind, die als Anschalt-, Trenn-, Schutz- oder Testelemente (8,9,10,11) ausgebildet sind.

2. Verteilereinrichtung nach Anspruch 1,
dadurch gekennzeichnet,
daß die Zentraleinheit (2) aus zwei Teilelementen (18,19) gebildet ist, die mittels eines Verbindungselementes (45) elektrisch verbunden sind.

3. Verteilereinrichtung nach Anspruch 2,
dadurch gekennzeichnet,
daß das Verbindungselement (45) aus einer Leiterplatte, einem Bandkabel oder aus Einzelleitungen besteht.

4. Verteilereinrichtung nach Anspruch 1,
dadurch gekennzeichnet,
daß mehrere Zentraleinheiten (2) übereinander in mehreren Ebenen (E1, E2) in einem Rahmenteil (14) eingesetzt sind.

5. Verteilereinrichtung nach Anspruch 1,
dadurch gekennzeichnet,
daß zwischen zwei Zentraleinheiten (2) ein Erd- oder Schirmblech (27) eingefügt ist.

6. Verteilereinrichtung nach Anspruch 5,
dadurch gekennzeichnet,
daß das Erd- oder Schirmblech (27) zur elektrischen Verbindung mit dem Rahmenteil (14) Kontaktzungen (50) aufweist.

7. Verteilereinrichtung nach Anspruch 1,
dadurch gekennzeichnet,
daß zur Bildung einer Einstecköffnung (49) an der Ober- und Unterseite der Zentraleinheiten (2) Nuten (48) angeordnet sind, in die zur Kontaktierung des Erd- oder Schirmbleches (27) die Steckerzungen (12) der Funktionselemente (7) eingesteckt sind.

8. Verteilereinrichtung nach Anspruch 1,

**dadurch gekennzeichnet,**

daß an den Anschlußfeldern (A,B,C,D) der Zentraleinheit (2) und an den Funktionselementen (7) zur beidseitigen Verrastung Rastelemente (16,17) vorgesehen sind.

9. Verteilereinrichtung nach Anspruch 1,

**dadurch gekennzeichnet,**

daß die Rastelemente (16,17) als Rasthaken (42) ausgebildet sind.

10. Verteilereinrichtung nach Anspruch 1,

**dadurch gekennzeichnet,**

daß das Trennelement (9) als Zugang zu einem Trennkontakt (23) mindestens eine den Steckerzungen (12) gegenüberliegende Einstecköffnung (15) aufweist.

11. Verteilereinrichtung nach Anspruch 1,

**dadurch gekennzeichnet,**

daß das Anschlußelement (8) in die Einstecköffnung (15) des Trennelementes (9) eingesteckt ist.

12. Verteilereinrichtung nach Anspruch 1,

**dadurch gekennzeichnet,**

daß das Trennelement (9) aus einem Einfach-Trennelement (24) oder aus einem Doppel-Trennelement (25) gebildet ist.

13. Verteilereinrichtung nach Anspruch 11,

**dadurch gekennzeichnet,**

daß die Steckerzungen (12) einseitig mit einer Isolierung (54) versehen sind.

FIG.1

# FIG.2

# FIG.3

# FIG.3a   FIG.3b   FIG.3c

# FIG.4

# FIG.5

# FIG.6

# FIG.7